# EUROPÄISCHE PATENTSCHRIFT

(11) **EP 3 599 153 B1**
(45) Veröffentlichungstag und Bekanntmachung des Hinweises auf die Patenterteilung: **09.08.2023**
(21) Anmeldenummer: 19180324.6
(22) Anmeldetag: 14.06.2019
(51) Int. Cl.: B62M 6/45, B62M 6/50

(54) **REGELVERFAHREN ZUR ANPASSUNG EINES FAHRVERHALTENS EINES ELEKTROFAHRRADS BEIM SCHIEBEN DES ELEKTROFAHRRADS, STEUERGERÄT UND ELEKTROFAHRRAD**
ELECTRIC BICYCLE, CONTROLLER AND METHOD FOR ADJUSTING DRIVING BEHAVIOUR OF AN ELECTRIC BICYCLE WHEN BEING PUSHED
PROCÉDÉ DE RÉGLAGE PERMETTANT D'AJUSTER UN COMPORTEMENT DE CONDUITE D'UNE BICYCLETTE ÉLECTRIQUE LORS DU GLISSEMENT DE LA BICYCLETTE ÉLECTRIQUE, APPAREIL DE COMMANDE ET BICYCLETTE ÉLECTRIQUE

(30) Priorität: 25.07.2018 DE 102018212453
(43) Veröffentlichungstag der Anmeldung: 29.01.2020
(73) Patentinhaber: Robert Bosch GmbH, 70442 Stuttgart (DE)
(72) Erfinder: Dackermann, Tim, 72072 Tuebingen (DE); Weinmann, Matthias, 72336 Balingen (DE); Baumgaertner, Daniel, 72070 Tuebingen (DE); Wienss, Andreas, 72800 Eningen Unter Achalm (DE)

(56) Entgegenhaltungen:
- EP-A1- 2 829 464
- CN-B- 103 112 540
- DE-B3-102016 218 374

## Beschreibung

Die vorliegende Erfindung betrifft ein Regelverfahren zur Anpassung eines Fahrverhaltens eines Elektrofahrrads beim Schieben des Elektrofahrrads. Die Erfindung betrifft auch ein Steuergerät zur Durchführung des erfindungsgemäßen Regelverfahrens und ein Elektrofahrrad mit diesem Steuergerät.

### Stand der Technik

Dokument EP 2 829 464 A1 zeigt die Präambel des Anspruchs 1. Die Schriften DE 10 2016 218 374 B3 sowie DE 10 2016 209 560 B3 offenbaren jeweils ein Verfahren und ein Steuergerät zur motorischen Unterstützung eines Nutzers beim Schieben eines Elektrofahrrads.

Fahrräder mit Elektromotor, insbesondere vollgefederte Moutainbikes, weisen aufgrund der Stabilitäts- und Sicherheitsanforderungen meist eine Vielzahl an robusten Fahrradkomponenten auf. Aufgrund des Gewichts dieser Fahrradkomponenten, des Gewichtes einer Antriebseinheit mit dem Elektromotor sowie des Geweichtes eines Batteriemoduls sind Elektrofahrräder gegenüber normalen Fahrrädern ohne Motor vergleichsweise schwer. Elektrofahrräder, insbesondere Mountainbikes, werden allerdings auch auf steilen Wegstrecken mit sehr engen Kurven bergauf betrieben, wobei diese Wegstrecken manchmal nur durch Schieben des Elektrofahrrads überwunden werden können. Wegen des hohen Gewichtes ist insbesondere in dem vorstehend beschriebenen Fall eine motorische Unterstützung für einen Nutzer beim Schieben des Elektrofahrrads sehr hilfreich.

Die Aufgabe der vorliegenden Erfindung ist es, eine Regelung eines Elektromotors im Schiebehilfebetrieb zu verbessern, insbesondere für Mountainbikes.

### Offenbarung der Erfindung

Die vorliegende Aufgabe wird gemäß des unabhängigen Anspruch 1 gelöst.

Die vorliegende Erfindung betrifft ein Regelverfahren zur Anpassung eines Fahrverhaltens eines Elektrofahrrads beim Schieben des Elektrofahrrads. Vorzugsweise weist das Elektrofahrrad eine Antriebseinheit mit einem Elektromotor auf, wobei die Antriebseinheit insbesondere im Bereich der Tretachse des Elektrofahrrads angeordnet ist. Zunächst wird in dem Regelverfahren eine Aktivierung einer Schiebehilfe durch den Nutzer erkannt und eine Geschwindigkeit des Elektrofahrrads erfasst. In einem weiteren Schritt wird ein Lenkwinkel des Elektrofahrrads ermittelt. Vorzugsweise wird der Lenkwinkel mittels eines Sensors erfasst beziehungsweise ermittelt. Beispielsweise wird ausgehend von einer Ausrichtung des Lenkers des Elektrofahrrads zur Gradeausfahrt mittels eines Verdrehungssensors eine Verdrehung zwischen einem Steuerrohr des Elektrofahrrads und einem Gabelschaft des Elektrofahrrads erfasst. Dieser Verdrehungssensor ist beispielsweise am Steuerrohr und/oder Gabelschaft angeordnet. Alternativ oder zusätzlich kann der Lenkwinkel mittels wenigstens einer inertialen Messeinheiten erfasst werden, welche beispielsweise am Lenker in einem Steuergerät oder einem Smartphone angeordnet ist. Anschließend erfolgt eine Regelung des Elektromotors in Abhängigkeit der erkannten Aktivierung der Schiebehilfe, der erfassten Geschwindigkeit und des ermittelten Lenkwinkels zur Anpassung einer Geschwindigkeit und/oder einer Beschleunigung des Elektrofahrrads. Das Verfahren weist den Vorteil auf, dass beim Schieben durch den Nutzer mittels des Elektromotors eine Unterstützungskraft bereitgestellt wird, wobei die Unterstützungskraft beziehungsweise die Geschwindigkeit und/oder die Beschleunigung des Elektrofahrrads in engen Kurven insbesondere reduziert wird. Dadurch kann der Nutzer das Elektrofahrrad durch enge Kurven komfortabel führen beziehungsweise schieben.

In einer besonders bevorzugten Ausführung wird in einem weiteren Verfahrensschritt eine Drehbeschleunigung des Lenkers erfasst. Eine Drehbeschleunigung des Lenkers kann beispielsweise mittels Drehratensensoren erfasst werden, welche insbesondere am Lenker in einem Steuergerät des Elektrofahrrads und/oder am Lenker in einem Smartphone und/oder in mindestens einem Lenkergriff angeordnet sind. Die Regelung des Elektromotors erfolgt in dieser Ausführung zusätzlich in Abhängigkeit der erfassten Drehbeschleunigung des Lenkers. Diese Ausführung erzielt vorteilhafterweise im Schiebehilfebetrieb des Elektrofahrrads ein Fahrverhalten, welches beim Schieben beziehungsweise Führen des Elektrofahrrads sehr schnell an eine Kurvenfahrt auf der Fahrtstrecke angepasst wird.

In einer Ausgestaltung wird ein Kippwinkel des Elektrofahrrads erfasst. Die Erfassung des Kippwinkels erfolgt beispielsweise mittels einer inertialen Messeinheit in dem Steuergerät, dem Smartphone und/oder der Antriebeseinheit des Elektrofahrrads, wobei die inertiale Messeinheit auch an anderen Stellen des Elektrofahrrads angeordnet sein kann. In dieser Ausgestaltung wird der Lenkwinkel in Abhängigkeit des erfassten Kippwinkels ermittelt. Diese Ausgestaltung weist den Vorteil auf, dass der Kippwinkel ohne zusätzliche komplexe Sensoren und folglich kostengünstig erfasst wird. Des Weiteren wird in dieser Ausgestaltung vorteilhafterweise in schwierigen Situationen, in welchen das Elektrofahrrad angekippt wird, beispielsweise beim Passieren unter einem umgefallenen Baum im Wald, die Geschwindigkeit und/oder die Beschleunigung im Schiebehilfebetrieb geregelt, insbesondere jeweils reduziert.

In einer Weiterführung wird die Erfassung der Geschwindigkeit am Vorderrad des Elektrofahrrads durchgeführt. Durch diese Weiterführung kann ein Vorwärtstreiben des Elektrofahrrads durch das Hinterrad trotz stillstehendem oder langsam drehendem Vorderrad verhindert werden. Ferner wird durch diese Weiterführung eine Geschwindigkeit und/oder Beschleunigung des Elektrofahrrads im Schiebehilfebetrieb frühzeitig an eine Kurvenfahrt angepasst.

Des Weiteren kann es vorzugsweise vorgesehen sein, eine Drehzahl des Vorderrads und eine Drehzahl des Hinterrads des Elektrofahrrads zu erfassen. Anschließend erfolgt in dieser Ausführung eine Ermittlung des Lenkwinkels in Abhängigkeit der Differenz zwischen der Drehzahl des Vorderrads und der Drehzahl des Hinterrads. Falls das Elektrofahrrad mit einem ABS-System ausgestattet ist, sind in dieser Ausführung vorteilhafterweise keine zusätzlichen Sensoren zur Ermittlung des Lenkwinkels notwendig, da die Drehzahl des Vorderrads und die Drehzahl des Hinterrads für die ABS-Funktion bereits erfasst werden. Des Weiteren kann in dieser Ausführung eine schwierige Fahrsituation, wie eine enge Kurve, zuverlässig erkannt werden.

Erfindungsgemäss wird durch die Regelung des Elektromotors eine mit zunehmendem Betrag des Lenkwinkels stetig abnehmende Geschwindigkeit des Elektrofahrrads und/oder eine mit zunehmendem Betrag des Lenkwinkels stetig abnehmende Beschleunigung des Elektrofahrrads eingestellt. Dadurch wird vorteilhafterweise eine Anpassung des Fahrverhaltens des Elektrofahrrads proportional zum Lenkwinkel beziehungsweise proportional zum Kurvenradius einer Kurve einer Fahrtstrecke erreicht. In engen Kurven resultiert dadurch für den Nutzer bei einer aktivierten Schiebehilfe beziehungsweise im Schiebehilfebetrieb ein sehr angenehmes Fahrverhalten des Elektrofahrrads.

Erfindungsgemäss wird durch die Regelung des Elektromotors bei einem Betrag des Lenkwinkels größer oder gleich einem Lenkwinkelschwellenwert eine konstante Geschwindigkeit und/oder Beschleunigung des Elektrofahrrads eingestellt. Dadurch wird der Vorteil erzielt, dass bei sehr kleinen Lenkwinkeln nur eine minimale Beschleunigung und/oder eine sehr niedrige Geschwindigkeit des Elektrofahrrads resultiert, wodurch das Elektrofahrrad auch durch sehr enge Kurven komfortabel und langsam durch den Nutzer geführt beziehungsweise geschoben werden kann.

Es ist erfindungsgemäss vorgesehen, dass die Regelung des Elektromotors zusätzlich in Abhängigkeit mehrerer vorgegebener Lenkwinkelbereiche erfolgt. In dieser Ausführung wird durch die Regelung in Abhängigkeit eines Betrags des aktuellen Lenkwinkels eine dem jeweiligen Lenkwinkelbereich zugeordneten Geschwindigkeit des Elektrofahrrads und/oder eine dem jeweiligen Lenkwinkelbereich zugeordnete Beschleunigung des Elektrofahrrads eingestellt. Dadurch bleibt das Fahrverhalten in einem jeweiligen Lenkwinkelbereich für den Nutzer konstant.

Ferner wird in einer anderen Weiterführung ein Nickwinkel des Elektrofahrrads um die Querachse des Elektrofahrrads erfasst. Anschließend erfolgt in dieser Weiterführung die Regelung des Elektromotors zusätzlich in Abhängigkeit des erfassten Nickwinkels. Beispielsweise wird die Regelung nur bei einer Überschreitung eines Nickwinkelschwellenwertes durchgeführt, das heißt mit anderen Worten nur an einem Hang einer Fahrtstrecke, wobei der Hang eine Steigung größer dem Nickwinkels aufweist.

Nicht beansprucht, ist ein Steuergerät zur Durchführung des erfindungsgemäßen Regelverfahrens und ein Elektrofahrrad mit dem erfindungsgemäßen Steuergerät.

Weitere Vorteile ergeben sich aus der nachfolgenden Beschreibung von Ausführungsbeispielen mit Bezug zu den Figuren.
- Figur 1:: Elektrofahrrad in seitlicher Ansicht
- Figur 2:: Elektrofahrrad in Ansicht von oben
- Figur 3:: Elektrofahrrad in Ansicht von hinten
- Figur 4:: Ablaufdiagramm des Regelverfahrens als Blockschaltbild
- Figur 5:: Steuergerät
- Figur 6:: Geschwindigkeits- und Beschleunigungsverlauf

### Ausführungsbeispiele

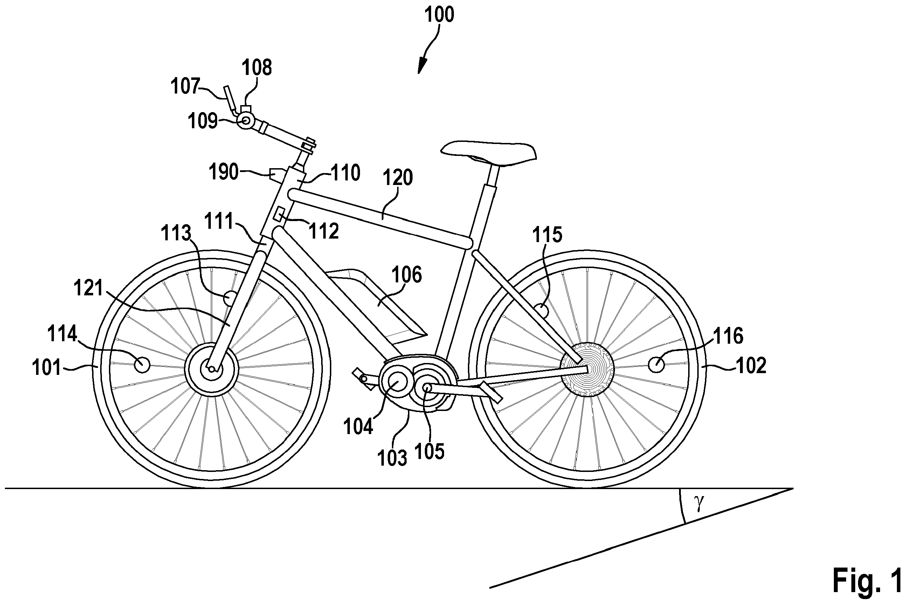

In Figur 1 ist ein Elektrofahrrad 100 in seitlicher Ansicht dargestellt. Das Elektrofahrrad 100 weist ein Vorderrad 101 und ein Hinterrad 102 auf. An dem Elektrofahrrad 100 ist ferner im Bereich einer Tretachse 105 eine Antriebseinheit 103 mit einem Elektromotor 104 und einem Getriebe angeordnet, wobei die Tretachse 105 durch einen Nutzer mittels zweier Pedale zur Erzeugung eines manuellen Drehmomentes angetrieben werden kann. Der Elektromotor 104 der Antriebseinheit 103 ist dazu eingerichtet, zusätzlich zum manuellen Drehmoment des Nutzers ein motorisches Drehmoment zu erzeugen und auf ein Hinterrad des Elektrofahrrads 100 zu übertragen. Die Antriebseinheit 103 wird dazu mittels eines Batteriemoduls 106 mit Energie versorgt. Ein Steuergerät 107 und/oder ein Smartphone ist dazu eingerichtet, den Elektromotor 104 anzusteuern beziehungsweise zu regeln. Um einen Schiebehilfe-Betriebsmodus zu aktivieren, kann der Nutzer einen Schalter 108 betätigen. Der Schalter 108 ist beispielsweise am Lenker 109 des Elektrofahrrads 100 angeordnet. Alternativ kann das Steuergerät 107 und/oder das Smartphone den Schalter 108 aufweisen, beispielsweise ist der Schalter 108 als Touchscreen-Funktion realisiert. Der Rahmen 120 des Elektrofahrrads 100 weist ein Steuerrohr 110 auf. Ein Gabelschaft 111 einer Lenkergabel 121, welche drehfest mit dem Lenker 109 verbunden ist, ist durch ein Steuerrohr 110 des Rahmens 120 drehbar geführt, so dass mittels des Lenkers 109 ein Lenkwinkel α des Elektrofahrrads 100 zur Lenkung des Elektrofahrrads 100 eingestellt werden kann. Mit anderen Worten wird bei einer Änderung des Lenkwinkels α mittels des Lenkers 109 eine Ausrichtung einer Laufrichtung des Vorderrads 101 gegenüber einer Ausrichtung einer Laufrichtung des Hinterrads 102 verändert beziehungsweise verdreht. Diese Verdrehung des Gabelschafts 111 gegenüber dem Steuerrohr 110 des Rahmens 120 wird in diesem Beispiel durch einen Verdrehungssensor 112 erfasst. Alternativ oder zusätzlich kann die Verdrehung in Abhängigkeit von Lagesensordaten ermittelt werden, wobei die Lagesensordaten mittels mindestens eines Lagesensors 530 (nicht dargestellt) erfasst werden, insbesondere mittels einer oder mehrerer inertialen Messeinheiten. Der Lagesensor 530 ist am Lenker 109, insbesondere an einem Lenkergriff, im Steuergerät 107 und/oder im Smartphone angeordnet. Es kann des Weiteren vorgesehen sein, dass eine Drehbeschleunigung des Lenkers 109 durch beispielsweise einen Drehratensensor 540 am Lenker 109 erfasst wird, wobei der Drehratensensor 540 beispielsweise im Steuergerät 107 und/oder im Smartphone am Lenker 109 angeordnet sein kann. Des Weiteren weist das Elektrofahrrad 100 einen optionalen Geschwindigkeitssensor 113 am Vorderrad 101 und einen optionalen Geschwindigkeitssensor 115 am Hinterrad 102 auf. Die Geschwindigkeitssensoren 113 und 115 erfassen jeweils eine Drehzahl des Vorderrads 101 beziehungsweise des Hinterrades 102 mittels jeweils einem an den Speichen angeordneten Magneten 114,116. Mit anderen Worten wird in diesem Ausführungsbeispiel die Geschwindigkeit des Vorderrads 101 und/oder des Hinterrades 102 mittels jeweils einem Reed-Sensor 113, 115 erfasst. Es können alternative Sensortypen zur Geschwindigkeitserfassung am Hinterrad 102 und/oder am Vorderrad 101 vorgesehen sein. Es kann ferner vorgesehen sein, dass beispielsweise in dem Steuergerät 107 und/oder dem Smartphone am Lenker 109 ein Kippwinkel β mittels eines Kippwinkelsensors und/oder ein Nickwinkel γ mittels eines Nickwinkelsensors erfasst werden, insbesondere werden der Kippwinkel β und der Nickwinkel γ mittels einer inertialen Messeinheit des Elektrofahrrads 100 erfasst. Es kann vorgesehen sein eine Kamera an dem Elektrofahrrad 100anzuordnen, wobei die Kamera beispielsweise am Steuergerät und/oder am Smartphone und/oder die Kamera 190 am Rahmen 120, beispielsweise im Bereich des Steuerrohres 110, angeordnet ist. Die Kamera, beispielsweise eine Weitwinkelkamera 190, weist eine Blickrichtung nach vorne und/oder oben auf.

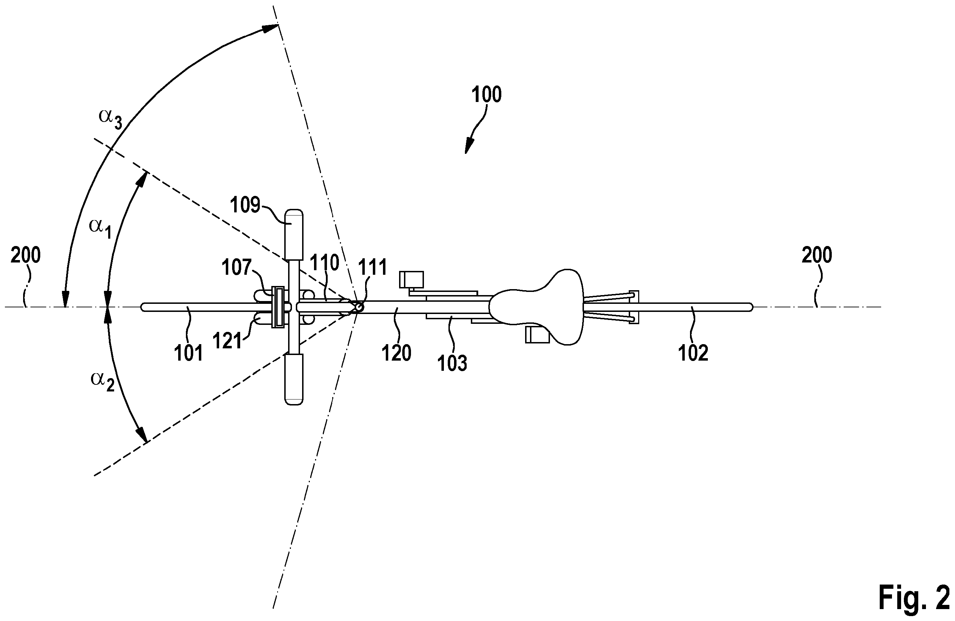

In Figur 2 ist das Elektrofahrrad 100 in einer Ansicht von oben dargestellt, wodurch der Lenkwinkel a des Lenkers 109 visualisiert wird. Eine Lenkung des Elektrofahrrads 100 resultiert in einer Verdrehung des Lenkers 109 beziehungsweise des mit dem Lenker 109 drehfest verbundenen Gabelschafts 111 gegenüber dem Steuerrohr 110 des Rahmens 120 um einen Lenkwinkel a. Mit anderen Worten wird der Lenker 109 beim Lenken relativ zur Ausrichtung des Lenkers 109 bei einer Gradeausfahrt beziehungsweise einer Fahrt in Richtung der Längsachse 200 des Elektrofahrrads 100 verdreht. Bei einer Lenkung nach rechts resultieren beispielsweise positive Lenkwinkel α, beispielsweise α₁ und α₃. Bei einer Lenkung nach links resultieren beispielsweise negative Lenkwinkel α, beispielsweise α₂. Die Verdrehung des Lenkers 109 gegenüber der Längsachse 200 des Elektrofahrrads 100 beziehungsweise der Lenkwinkel α wird beispielsweise mittels des Verdrehungssensors 112 und/oder mittels Lagesensoren im Steuergerät 107 und/oder im Smartphones des Lenkers 109 erfasst.

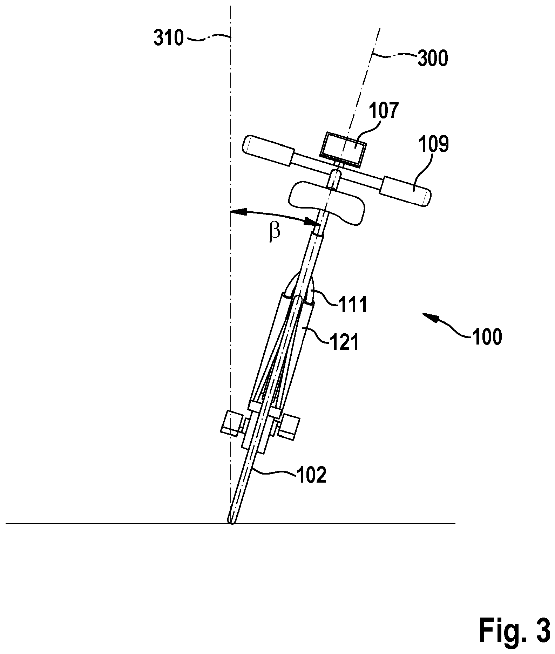

In Figur 3 ist das Elektrofahrrad 100 in einer Ansicht von hinten dargestellt. Eine Hochachse 300 des Elektrofahrrads 100 ist in diesem Ausführungsbeispiel gegenüber der vertikalen Achse 310 um einen Kippwinkel β verkippt. Mit anderen Worten liegt zwischen der Hochachse 300 des Elektrofahrrads 100 und der vertikalen Achse 310 der Kippwinkel β des Elektrofahrrads 100 vor. Der Kippwinkel β kann alternativ als Drehung um die Längsachse 200 des Elektrofahrrads 100 erfasst werden. Bei einer Gradeausfahrt des Elektrofahrrads 100 ist der Kippwinkel β Null. Während einer Kurvenfahrt des Elektrofahrrads 100 ist der Kippwinkel β größer als Null. Der Lenkwinkel a kann näherungsweise in Abhängigkeit des Kippwinkels β ermittelt werden.

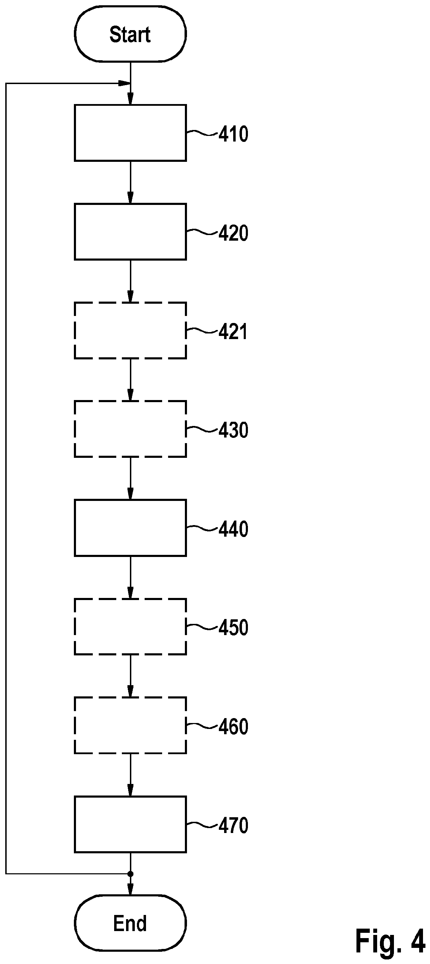

In Figur 4 ist ein Ablaufdiagramm des Regelverfahrens als Blockschaltbild dargestellt. Zunächst wird im Schritt 410 eine Aktivierung einer Schiebehilfe beziehungsweise eines Schiebehilfebetriebsmodus des Elektrofahrrads 100 durch einen Nutzer erkannt, beispielsweise durch eine Erkennung eine Betätigung des Schalters 108 zur Aktivierung der Schiebehilfe. Im anschließenden Schritt 420 wird die Geschwindigkeit v des Elektrofahrrads 100 erfasst. Es kann im Schritt 420 vorgesehen sein, dass als Geschwindigkeit v des Elektrofahrrads 100 die Geschwindigkeit des Vorderrads 101 beziehungsweise eine Drehzahl n1 des Vorderrads 101 des Elektrofahrrads 100 erfasst wird. Zusätzlich oder alternativ kann im optionalen Schritt 421 eine Drehzahl n2 des Hinterrads 102 erfasst werden. Zusätzlich oder alternativ kann eine Erfassung 430 eines Kippwinkels β des Elektrofahrrads 100 beziehungsweise einer Drehung des Elektrofahrrads 100 um die Längsachse 200 erfolgen. Danach erfolgt eine Ermittlung 440 des Lenkwinkels a des Elektrofahrrads 100, wobei der Lenkwinkel a insbesondere in Abhängigkeit einer erfassten Verdrehung des Gabelschafts 111 gegenüber dem Steuerrohr 110 mittels eines Verdrehungssensors 112 erfasst wird und/oder in Abhängigkeit einer erfassten Verdrehung mittels Lagesensoren im Steuergerät 107 und/oder im Smartphones des Lenkers 109 ermittelt wird. Alternativ kann eine Ermittlung 440 des Lenkwinkels a durch eine Bildverarbeitung in Abhängigkeit eines erfassten Kamerabildes mittels einer Bildverarbeitung erfolgen. Die Ermittlung 440 des Lenkwinkels a wird zusätzlich oder alternativ in Abhängigkeit einer Differenz zwischen der Drehzahl n1 des Vorderrads 101 und der Drehzahl n2 des Hinterrads 102 durchgeführt. Es kann vorgesehen sein, den Lenkwinkel a zusätzlich oder alternativ in Abhängigkeit des erfassten Kippwinkels β zu ermitteln. Optional wird des Weiteren im Schritt 450 eine Drehbeschleunigung des Lenkers 109 erfasst. Ferner kann im Schritt 460 optional ein Nickwinkel γ des Elektrofahrrads 100 erfasst werden. Anschließend wird eine Regelung 460 des Elektromotors 104 in Abhängigkeit der erkannten Aktivierung der Schiebehilfe, der erfassten Geschwindigkeit v des Elektrofahrrads 100 und des ermittelten Lenkwinkels a zur Anpassung der Geschwindigkeit v und/oder einer Beschleunigung a des Elektrofahrrads 100 durchgeführt. Beispielsweise wird die Geschwindigkeit v des Elektrofahrrads auf eine dem Lenkwinkel a zugeordnete Geschwindigkeit beziehungsweise Zielgeschwindigkeit geregelt. Optional erfolgt die Regelung 470 des Elektromotors 104 in Abhängigkeit der erfassten Drehbeschleunigung des Lenkers 109. Vorteilhafterweise wird die Geschwindigkeit v und/oder die Beschleunigung a des Elektrofahrrads 100 durch die Regelung 470 mit erfasster zunehmender Drehbeschleunigung stetig reduziert. Die Regelung 470 des Elektromotors 104 erfolgt zusätzlich optional in Abhängigkeit des erfassten Nickwinkels γ, wobei die Regelung 470 bevorzugt nur bei einer Überschreitung eines Nickwinkelschwellenwertes SWy erfolgt.

Durch die Regelung 470 des Elektromotors 104 wird bevorzugt eine mit zunehmendem Betrag des Lenkwinkels α stetig abnehmende Geschwindigkeit v des Elektrofahrrads 100 und/oder eine mit zunehmendem Betrag des Lenkwinkels α stetig abnehmende Beschleunigung a des Elektrofahrrads 100 eingestellt. Es kann vorgesehen sein, dass für einen Betrag des Lenkwinkels a größer oder gleich einem Lenkwinkelschwellenwert SWa eine konstante Geschwindigkeit vₘᵢₙ des Elektrofahrrads 100 und/oder eine konstante Beschleunigung aₘᵢₙ des Elektrofahrrads 100 eingestellt wird. In dieser Ausführung wird die konstante Beschleunigung aₘᵢₙ des Elektrofahrrads 100 nicht unterschritten. Des Weiteren können mehrere vorgegebene Lenkwinkelbereiche vorgesehen sein, welchen jeweils eine konstante Geschwindigkeit beziehugnsweise Zielgeschwindigkeit des Elektrofahrrads 100 und/oder eine konstante Beschleunigung zugeordnet werden. Die Regelung 470 erfolgt dann in Abhängigkeit des aktuellen Lenkwinkels α und der vorgegebenen Lenkwinkelbereiche zur Einstellung der dem jeweiligen Lenkwinkelbereich zugeordneten konstanten Geschwindigkeit und/oder der dem jeweiligen Lenkwinkelbereich zugeordneten konstante Beschleunigung. Bei einem Wechsel von einem vorgegebenen Lenkwinkelbereich in einen anderen Lenkwinkelbereich in Abhängigkeit des ermittelten Lenkwinkels α kann eine verzögerte Anpassung der jeweils zugeordneten konstanten Geschwindigkeit und/oder der zugeordneten konstanten Beschleunigung vorgesehen sein, so dass keine abrupten Sprünge beziehungsweise Diskontinuitäten im Geschwindigkeitsverlauf und/oder im Beschleunigungsverlauf des Elektrofahrrads 100 bei geändertem Lenkwinkel α beziehungsweise verändertem aktuellen Lenkwinkelbereich resultieren.

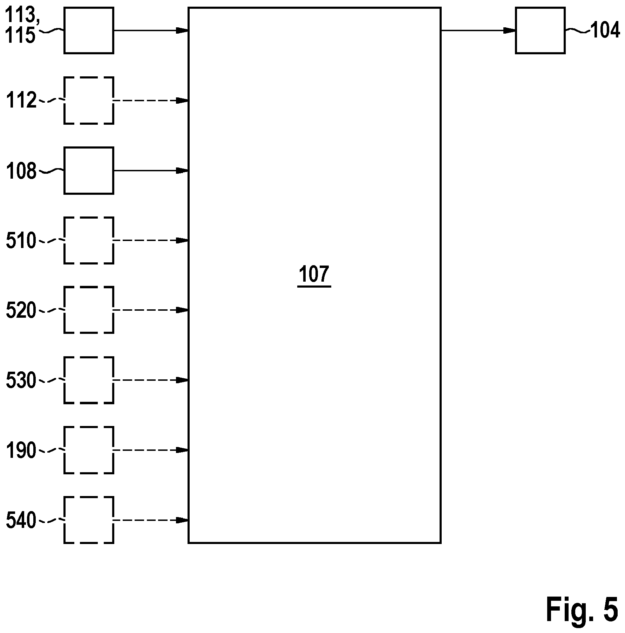

In Figur 5 ist das Steuergerät 107 dargestellt, welches als Smartphone realisiert sein kann. Das Steuergerät 107 erfasst ein Schaltsignal des Schalters 108, wobei das Schaltsignal eine Aktivierung des Schiebehilfebetriebsmodus beziehungsweise der Schiebehilfe des Elektrofahrrads 100 repräsentiert. Das Steuergerät 107 erfasst ferner eine Sensorgröße des Geschwindigkeitssensors 113 und/oder 115, welche jeweils die Geschwindigkeit des Elektrofahrrads 100 am Vorderrad 101 oder am Hinterrad 102 und/oder die Geschwindigkeit v des Rahmens 120 bzw. des Steuergeräts 107 in Fahrtrichtung repräsentiert. Ferner kann das Steuergerät 107 optional eine Verdrehungsgröße mittels des Verdrehungssensors 112 und/oder mittels Lagesensoren 530 erfassen, wobei die Verdrehungsgröße den Lenkwinkel α repräsentiert. Das Steuergerät 107 erfasst optional eine Drehrate des Lenkers 109 mittels eines Drehratensensors 540, eine Kippwinkelgröße mittels eines Kippwinkelsensors 510 und/oder eine Nickwinkelgröße mittels eines Nickwinkelsensors 520. Eine inertiale Messeinheit, welche am Elektrofahrrad 100 angeordnet sein kann, umfasst vorteilhafterweise den Drehratensensor 540, den Kippwinkelsensor 510, den Nickwinkelsensor 520 und/oder den Lagesensor 530. Das Steuergerät 107 erfasst darüber hinaus optional ein Kamerabild von einer Kamera 190. Das Steuergerät 107 ist dazu eingerichtet, den Elektromotor 104 in Abhängigkeit der erfassten Sensorgröße des Geschwindigkeitssensors 113 und/oder 115 und der Verdrehungsgröße zu regeln. Optional regelt das Steuergerät den Elektromotor 104 zusätzlich in Abhängigkeit der erfassten Drehrate, der erfassten Kippwinkelgröße, der erfassten Nickwinkelgröße und/oder des erfassten Kamerabilds.

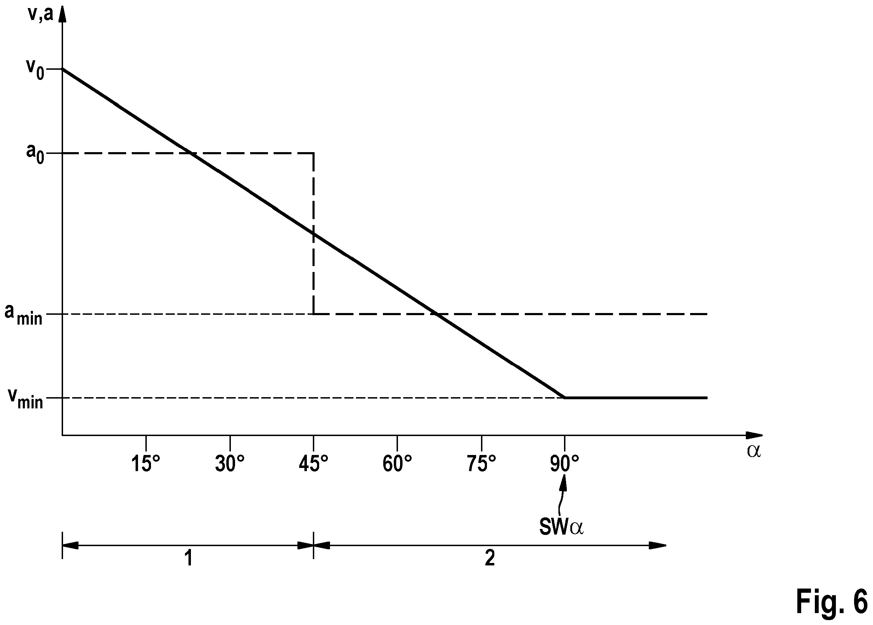

In Figur 6 ist beispielshaft ein Diagramm zum Verlauf der Geschwindigkeit v des Elektrofahrrads 100 und zum Verlauf der Beschleunigung a des Elektrofahrrads 100 in Abhängigkeit des Lenkwinkels α bei einer aktivierten Schiebehilfe des Elektrofahrrads 100 dargestellt. Der Verlauf der Geschwindigkeit v wird durch eine durchgezogene Linie repräsentiert. Die Geschwindigkeit v beziehungsweise die durch die Regelung einzustellende Zielgeschwindigkeit v wird in diesem Beispiel durch die Regelung 470 von einer Geschwindigkeit v₀ bei Gradeausfahrt, d.h. α=0°, linear auf eine Zielgeschwindigkeit vₘᵢₙ bei einem Lenkwinkel α=90° reduziert. Überschreitet der Lenkwinkel 90° bleibt die Geschwindigkeit konstant v=vₘᵢₙ. Der Verlauf der Beschleunigung a wird durch eine gestrichelte Linie repräsentiert. Die Beschleunigung a wird in diesem Beispiel in Abhängigkeit vorgegebener Lenkwinkelbereiche 1, 2 geregelt. Mit zunehmendem Lenkwinkel bleibt die Beschleunigung zunächst im Lenkwinkelbereich 1 konstant und entspricht der Beschleunigung a₀ bei Gradeausfahrt, d.h. bei α=0°. Überschreitet der Lenkwinkel 45° so wird durch die Regelung 470 im Lenkwinkelbereich 2 eine konstante Beschleunigung a=aₘᵢₙ eingestellt.

## Patentansprüche

1. Regelverfahren zur Anpassung eines Fahrverhaltens eines Elektrofahrrads (100) beim Schieben des Elektrofahrrads (100), wenigstens umfassend die folgenden Schritte
• Erkennung (410) einer Aktivierung einer Schiebehilfe durch einen Nutzer,
• Erfassung (420) einer Geschwindigkeit (v) des Elektrofahrrads (100),
• Ermittlung (440) eines Lenkwinkels (α) eines Lenkers (109) des Elektrofahrrads (100),
• Regelung (470) eines Elektromotors (104) einer Antriebseinheit des Elektrofahrrads in Abhängigkeit der erkannten Aktivierung der Schiebehilfe, der erfassten Geschwindigkeit (v) und des ermittelten Lenkwinkels (α) zur Anpassung der Geschwindigkeit (v) und/oder einer Beschleunigung (a) des Elektrofahrrads (100), **dadurch gekennzeichnet, dass**
• durch die Regelung (470) des Elektromotors (104) eine mit zunehmendem Betrag des Lenkwinkels (α) stetig abnehmende Geschwindigkeit (v) des Elektrofahrrads (100) und/oder eine mit zunehmendem Betrag des Lenkwinkels (α) stetig abnehmende Beschleunigung (a) des Elektrofahrrads (100) eingestellt wird, und/oder
• durch die Regelung (470) des Elektromotors (104) für einen Betrag des Lenkwinkels (α) größer oder gleich einem Lenkwinkelschwellenwert (SWa) eine konstante Geschwindigkeit (vₘᵢₙ) des Elektrofahrrads (100) und/oder eine konstante Beschleunigung (aₘᵢₙ) des Elektrofahrrads (100) eingestellt wird, und/oder
• die Regelung (470) des Elektromotors (104) zusätzlich in Abhängigkeit mehrerer vorgegebener Lenkwinkelbereiche (1, 2) erfolgt, wobei durch die Regelung (470) des Elektromotors (104) in Abhängigkeit eines Betrags des Lenkwinkels (α) eine dem jeweiligen Lenkwinkelbereich (1, 2) zugeordnete Geschwindigkeit (v) des Elektrofahrrads (100) und/oder eine dem jeweiligen Lenkwinkelbereich (1, 2) zugeordnete Beschleunigung (a) des Elektrofahrrads (100) eingestellt wird.

2. Regelverfahren nach Anspruch 1, **dadurch gekennzeichnet, dass** die folgenden Schritte durchgeführt werden
• Erfassung (450) einer Drehbeschleunigung des Lenkers (109), und
• Regelung (470) des Elektromotors (104) in Abhängigkeit der erfassten Drehbeschleunigung.

3. Regelverfahren nach einem der vorhergehenden Ansprüche, **dadurch gekennzeichnet, dass** die folgenden Schritte durchgeführt werden
• Erfassung (430) eines Kippwinkels (β) des Elektrofahrrads (100), und
• Ermittlung (440) des Lenkwinkels (α) in Abhängigkeit des erfassten Kippwinkels (β).

4. Regelverfahren nach einem der vorhergehenden Ansprüche, **dadurch gekennzeichnet, dass** die Erfassung (420) der Geschwindigkeit (v) an einem Vorderrad (101) des Elektrofahrrads (100) durchgeführt wird.

5. Regelverfahren nach einem der vorhergehenden Ansprüche, **dadurch gekennzeichnet, dass** die folgenden Schritte durchgeführt werden
• Erfassung (420) einer Drehzahl (n1) eines Vorderrads (101),
• Erfassung (421) einer Drehzahl (n2) eines Hinterrads (102) des Elektrofahrrads (100), und
• Ermittlung (440) des Lenkwinkels (α) in Abhängigkeit einer Differenz zwischen der Drehzahl (n1) des Vorderrads (101) und der Drehzahl (n2) des Hinterrads (102).

6. Regelverfahren nach einem der vorhergehenden Ansprüche, **dadurch gekennzeichnet, dass** die folgenden Schritte durchgeführt werden
• Erfassung (460) eines Nickwinkels (γ) des Elektrofahrrads (100), und
• Regelung (470) des Elektromotors (104) zusätzlich in Abhängigkeit des erfassten Nickwinkels (γ).

## Claims

1. Control method for adjusting a driving behaviour of an electric bicycle (100) when pushing the electric bicycle (100), at least comprising the following steps
• identifying (410) activation of a pushing assistant by a user,
• detecting (420) a speed (v) of the electric bicycle (100),
• ascertaining (440) a steering angle (α) of a handlebar (109) of the electric bicycle (100),
• controlling (470) an electric motor (104) of a drive unit of the electric bicycle depending on the identified activation of the pushing assistant, the detected speed (v) and the ascertained steering angle (α) for adjusting the speed (v) and/or an acceleration (a) of the electric bicycle (100), **characterized in that**,
• by controlling (470) the electric motor (104), a speed (v) of the electric bicycle (100) which continuously decreases as the magnitude of the steering angle (α) increases and/or an acceleration (a) of the electric vehicle (100) which continuously decreases as the magnitude of the steering angle (α) increases is set, and/or,
• by controlling (470) the electric motor (104), a constant speed (vₘᵢₙ) of the electric bicycle (100) and/or a constant acceleration (aₘᵢₙ) of the electric bicycle (100) is set for a magnitude of the steering angle (*α*) greater than or equal to a steering angle threshold value (SWa), and/or
• the control (470) of the electric motor (104) is additionally performed depending on a plurality of predefined steering angle ranges (1, 2), wherein a speed (v) of the electric bicycle (100) associated with the respective steering angle range (1, 2) and/or an acceleration (a) of the electric bicycle (100) associated with the respective steering angle range (1, 2) is set by the control (470) of the electric motor (104) depending on a magnitude of the steering angle (α).

2. Control method according to Claim 1, **characterized in that** the following steps are carried out
• detecting (450) a rotational acceleration of the handlebar (109), and
• controlling (470) the electric motor (104) depending on the detected rotational acceleration.

3. Control method according to either of the preceding claims, **characterized in that** the following steps are carried out
• detecting (430) a tilting angle (β) of the electric bicycle (100), and
• ascertaining (440) the steering angle (α) depending on the detected tilting angle (β).

4. Control method according to one of the preceding claims, **characterized in that** the detection (420) of the speed (v) is carried out on a front wheel (101) of the electric vehicle (100).

5. Control method according to one of the preceding claims, **characterized in that** the following steps are carried out
• detecting (420) a rotational speed (n1) of a front wheel (101),
• detecting (421) a rotational speed (n2) of a rear wheel (102) of the electric vehicle (100), and
• ascertaining (440) the steering angle (*α*) depending on a difference between the rotational speed (n1) of the front wheel (101) and the rotational speed (n2) of the rear wheel (102).

6. Control method according to one of the preceding claims, **characterized in that** the following steps are carried out
• detecting (460) a pitch angle (γ) of the electric bicycle (100), and
• controlling (470) the electric motor (104) additionally depending on the detected pitch angle (γ).

## Revendications

1. Procédé de régulation permettant d'adapter un comportement de conduite d'une bicyclette électrique (100) lorsqu'on pousse la bicyclette électrique (100), comprenant au moins les étapes suivantes
• la reconnaissance (410) d'une activation d'une aide à la poussée par un utilisateur,
• la détection (420) d'une vitesse (v) de la bicyclette électrique (100),
• l'établissement (440) d'un angle de braquage (α) d'un guidon (109) de la bicyclette électrique (100),
• la régulation (470) d'un moteur électrique (104) d'une unité d'entraînement de la bicyclette électrique en fonction de l'activation reconnue de l'aide à la poussée, de la vitesse détectée (v) et de l'angle de braquage (α) établi pour adapter la vitesse (v) et/ou une accélération (a) de la bicyclette électrique (100),
**caractérisé en ce que**
• la régulation (470) du moteur électrique (104) permet de régler une vitesse (v) de la bicyclette électrique qui diminue en continu avec une grandeur croissante de l'angle de braquage (α) et/ou de régler une accélération (a) de la bicyclette électrique (100) qui diminue en continu avec une grandeur croissante de l'angle de braquage (α), et/ou
• la régulation (470) du moteur électrique (104) permet de régler pour une grandeur de l'angle de braquage (α) supérieure ou égale à une valeur seuil d'angle de braquage (SWα) une vitesse constante (vₘᵢₙ) de la bicyclette électrique (100) et/ou une accélération constante (aₘᵢₙ) de la bicyclette électrique (100), et/ou
• la régulation (470) du moteur électrique (104) est effectuée en plus en fonction de plusieurs plages d'angle de braquage (1, 2), dans lequel la régulation (470) du moteur électrique (104) permet de régler en fonction d'une grandeur de l'angle de braquage (α) une vitesse (v) de la bicyclette électrique (100), associée à la plage d'angle de braquage (1, 2) respective, et/ou de régler une accélération (a) de la bicyclette électrique (100), associée à la plage d'angle de braquage (1, 2) respective.

2. Procédé de régulation selon la revendication 1, **caractérisé en ce que** les étapes suivantes sont effectuées
• la détection (450) d'une accélération angulaire du guidon (109), et
• la régulation (470) du moteur électrique (104) en fonction de l'accélération angulaire détectée.

3. Procédé de régulation selon l'une quelconque des revendications précédentes, **caractérisé en ce que** les étapes suivantes sont effectuées
• la détection (430) d'un angle d'inclinaison (β) de la bicyclette électrique (100), et
• l'établissement (440) de l'angle de braquage (α) en fonction de l'angle d'inclinaison (β) détecté.

4. Procédé de régulation selon l'une quelconque des revendications précédentes, **caractérisé en ce que** la détection (420) de la vitesse (v) est effectuée au niveau d'une roue avant (101) de la bicyclette électrique (100).

5. Procédé de régulation selon l'une quelconque des revendications précédentes, **caractérisé en ce que** les étapes suivantes sont effectuées
• la détection (420) d'une vitesse de rotation (n1) d'une roue avant (101),
• la détection (421) d'une vitesse de rotation (n2) d'une roue arrière (102) de la bicyclette électrique (100), et
• l'établissement (440) de l'angle de braquage (α) en fonction d'une différence entre la vitesse de rotation (n1) de la roue avant (101) et la vitesse de rotation (n2) de la roue arrière (102).

6. Procédé de régulation selon l'une quelconque des revendications précédentes, **caractérisé en ce que** les étapes suivantes sont effectuées
• la détection (460) d'un angle de tangage (γ) de la bicyclette électrique (100), et
• la régulation (470) du moteur électrique (104) en plus en fonction de l'angle de tangage (γ) détecté.
